# EUROPEAN PATENT APPLICATION

(11) **EP 0 670 245 A1**
(43) Date of publication of application: **06.09.1995**
(21) Application number: 95102491.8
(22) Date of filing: 22.02.1995
(51) Int. Cl.: B60R 9/12

(54) **Ski rack for motor vehicles**

(30) Priority: 04.03.1994 IT BO940087
(71) Applicant: F.A.R.M.A. S.r.l. Fabbrica Accessori Ricambi Moto e Auto, I-40054 Prunaro di Budrio (Bologna) (IT)
(72) Inventor: Tura, Gilberto, I-40054 Budrio (Bologna) (IT)
(74) Representative: Modiano, Guido, Dr.-Ing.

(57) **Abstract**

The ski rack comprises: a supporting element (14) that forms seats for accomodating respective pairs of skis and is articulated to lever means which are adapted to produce the angular rotation of the supporting element (14) between a transport position, located above means for coupling to the motor vehicle, and a lateral downward-tilted position for loading and unloading the skis. A clamping element (15) is pivoted to the supporting element (14) and is adapted to be locked by a lock element (16) in a position for closing the seats (23) in which the skis are accommodated. An engagement element (37) is adapted to rigidly couple the supporting element to the coupling means in the transport position.

## Description

The present invention relates to a ski rack for motor vehicles.

Various kinds of ski racks suitable to be removably applied to motor vehicles are currently known. In particular, some ski racks are installed by using a rack which is in turn fixed to the motor vehicle.

A known ski rack includes, for example, a ski supporting bar, which is suitable to be fixed transversely on top of the vehicle, and a clamping bar which is oscillatably mounted with respect to said supporting bar. Conveniently, the supporting bar forms a series of seats for respective pairs of skis. For safety reasons, the clamping bar can be locked onto the supporting bar by means of an appropriate lock element.

In known ski racks, loading and unloading the skis is generally difficult, since the skis must be accommodated in seats which are located at a significant height on top of the vehicle and cannot be reached easily. This is a considerable drawback, especially for short people.

A principal aim of the present invention is to solve the above described problem, by providing a ski rack for motor vehicles that allows to load and unload skis very easily.

Within the scope of this aim, an object of the present invention is to provide a ski rack which is simple in concept, safely reliable in operation, and versatile in use.

This aim and this object are both achieved, according to the invention, by the present ski rack for motor vehicles, characterized in that it comprises: a supporting element that forms seats for accomodating respective pairs of skis and is articulated to lever means suitable to produce the angular rotation of the supporting element between a transport position, located above means for coupling to the motor vehicle, and a lateral downward-tilted position for loading and unloading said skis; a clamping element, which is pivoted to said supporting element and is adapted to be locked by a lock element in a position for closing said seats in which the skis are accommodated; and an engagement element, which is adapted to rigidly couple said supporting element to said coupling means in said transport position.

Further characteristics and advantages of the invention will become apparent from the following detailed description of a preferred embodiment of the ski rack for motor vehicles, illustrated only by way of non-limitative example in the accompanying drawings, wherein:
figure 1 is a side view of the ski rack according to the invention, in its active configuration;
figure 2 is a corresponding longitudinal sectional view thereof;
figure 2a is a view of a detail of figure 2;
figure 3 is a plan view of a detail of said ski rack;

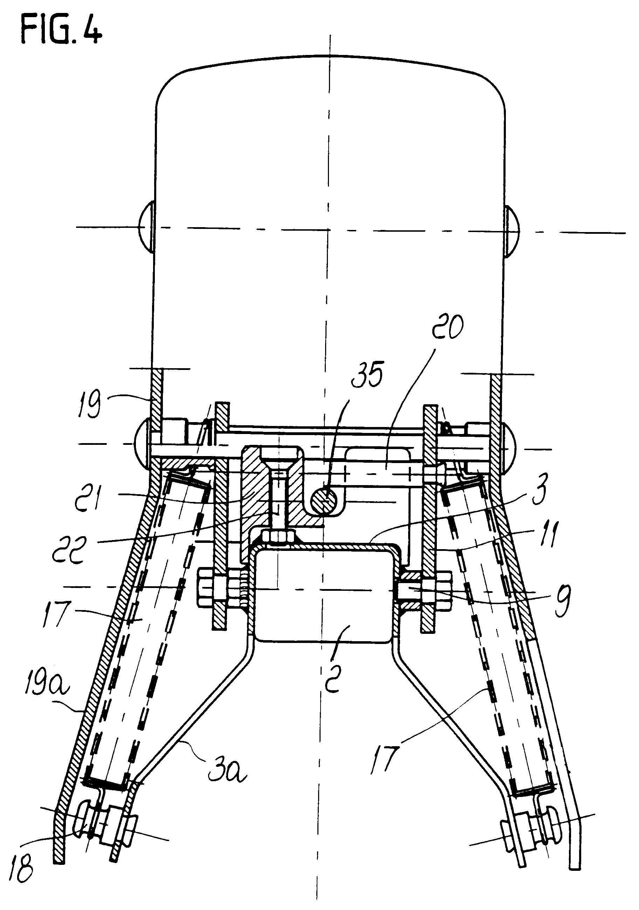

figure 4 is a transverse sectional view of the ski rack, taken along the plane IV-IV of figure 2;

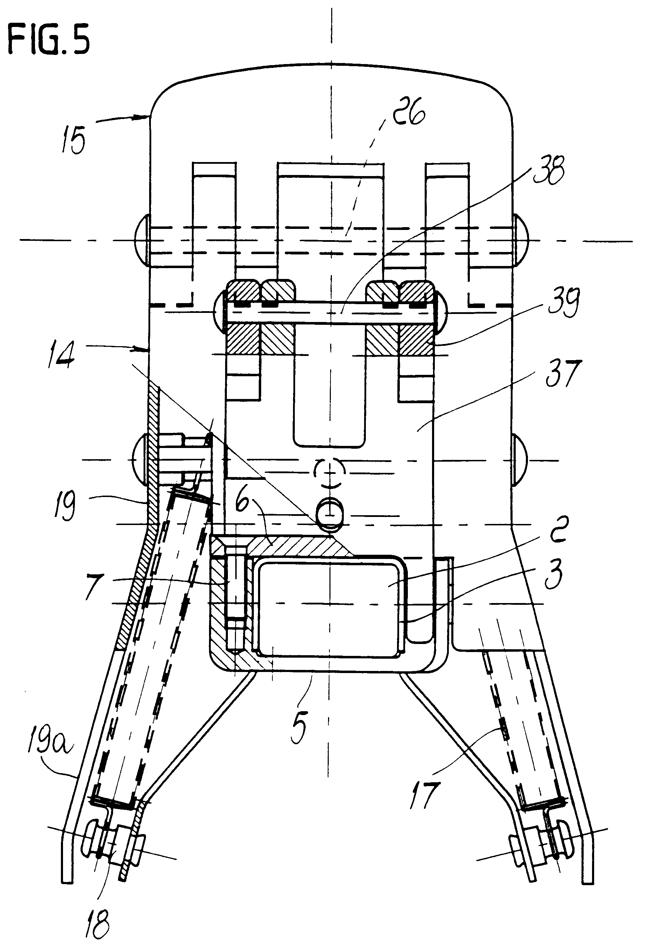

figure 5 is a partially cutout and sectional view thereof, taken from the side indicated by the arrow A in figure 2.

With particular reference to the above figures, the reference numeral 1 generally designates the ski rack according to the invention, which is meant to be mounted on a transverse bar 2 of a conventional rack for motor vehicles.

For this purpose, the ski rack 1 has a coupling element 3, which is constituted by a profiled element whose cross-section is shaped like an inverted U and is substantially complementary to the cross-section of said transverse bar 2 of the rack on which said element is meant to be applied. Said coupling element 3 is rigidly coupled to the bar 2 at one end by means of a screw element 4 that is screwed in a hole generally provided in said bar 2 and, at the opposite end, by means of a bracket 5 that surrounds said bar 2 from below; the bracket 5 is clamped by an upper strip 6 by means of screw elements 7.

A first pair of pivots 8 and a second pair of pivots 9 are rigidly coupled to the coupling element 3 on its outer sides and have an axis which lies horizontally and transversely with respect to the profiled element. The pivots 8 are arranged proximate to the end of the coupling element 3, whereas the pivots 9 are substantially central.

A first pair of levers 10 and a second pair of levers 11 are articulated to the pivots 8 and 9 respectively and can oscillate on vertical planes which lie longitudinally to the coupling element 3. At the opposite end, the levers 10 and 11 are articulated, by virtue of additional pivots 12 and 13, to an appropriately shaped ski supporting element 14. A ski clamping element 15 is pivoted to the supporting element 14 and can be locked by means of a lock element 16 which is in turn pivoted to the supporting element 14.

Accordingly, the levers 10 and 11 form a sort of articulated quadrilateral that allows the device to rotate into a downward-tilted position for loading and unloading the skis, as specified hereinafter.

This rotation is biased by a pair of helical springs 17 which are coupled to the transverse pivot 12 at one end and, at the other end, to respective pins 18 which are rigidly coupled to shaped extensions 3a of the coupling element 3. It should be noted that corresponding flaps 19a for protecting the springs 17 face these extensions 3a on the side directed outwardly; said flaps are formed, in a downward region, by the sides 19 of the supporting element 14.

A rod 20 is furthermore supported transversely between the levers 11 and is adapted to rest, in the above mentioned downward-tilted position of the ski rack, on a saddle 21 which is fixed to the coupling element 3 by means of a screw element 22 which is vertically welded to said coupling element 3.

The supporting element 14 forms, in an upward region, a series of recessed seats 23 which are meant to accomodate respective pairs of skis arranged transversely. To save space, the seats 23 of the skis are arranged at an angle with respect to the horizontal.

The clamping element 15 is appropriately shaped complementarily to the supporting element 14 and has, at the seats 23 of the skis, respective C-shaped elastic trimmings 24 which are adapted to act on said skis. The clamping element 15 is pivoted to one end of the supporting element 14 by means of a transverse pivot 26.

The body 28 of the lock 16 is pivoted to the opposite end of the supporting element 14 by means of an additional transverse pivot 27. Said body 28 is adapted to fit over a protrusion 29 of the clamping element 15.

The body 28 of the lock 16 forms a seat in which the cylinder 30 of said lock can rotate; said cylinder 30 can be actuated by means of an appropriate key, not shown in the drawing. The cylinder 30 has, at the end directed towards the inside of the lock, a tooth 31 which is adapted to cause the sliding of a latch 32 which is mounted inside the body 28 of the lock. The latch 32 is biased by a spring 33 and is adapted to engage by snap action, with its tip, an engagement seat 34 formed in the clamping element 15.

The supporting element 14 is furthermore affected longitudinally by a tie rod 35 that lies above the coupling element 3. Said tie rod 35 has, at one end, on the side that corresponds to the lock element 16, a threaded portion to which an actuation knob 36 is coupled. At the opposite end, the tie rod is articulated to an engagement element 37 of the supporting element 14.

The engagement element 37 is pivoted about a transverse pivot 38 to a fork 39 which is formed by the supporting element 14 and is actuated by a spring 40 which acts by compression in contrast with the action of the tie rod 35.

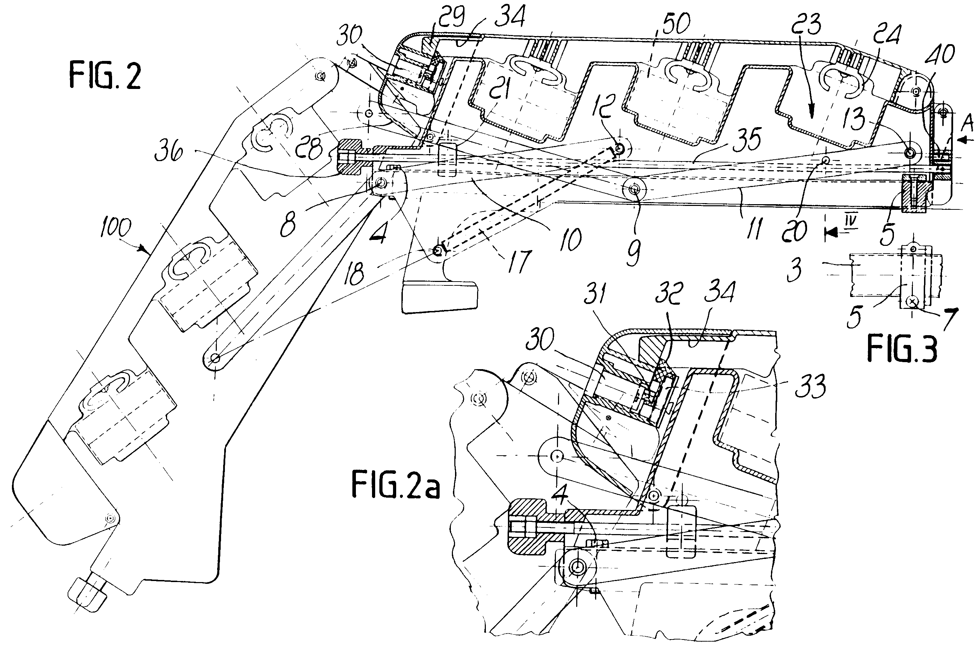

To use the ski rack, that is to say, to load and unload the skis, the assembly constituted by the supporting element 14 and by the clamping element 15 is rotated from the transport position, which lies above the profiled for coupling to the rack of the motor vehicle, to a lateral downward-tilted position, shown by the dashed line 100 in figure 2.

For this purpose, it is first of all necessary to disengage the engagement element 37 which couples the supporting element 14 to the profiled coupling element 3 which is fixed to the rack. To achieve this, the knob 36 of the tie rod 35 must be partially unscrewed, so as to loosen said tie rod 35. By being actuated by the spring 40, the engagement element 37 performs an angular rotation about the pivot 38 so as to disengage from the bracket 5.

At this point it is possible to perform the above mentioned rotation of the assembly constituted by the supporting element 14 and by the clamping element 15 into said position 100. It should be noted that said assembly essentially performs a pantograph-like movement, keeping the seats 23 of the supporting element 14 directed outwards. The springs 17, which act so as to contrast said rotation, elastically produce the stability of the opposite positions assumed by said assembly.

In the loading and unloading position 100, the rod 20 supported by the levers 11 rests on the saddle 21, which accordingly acts as stroke limiter.

In order to access the seats 23 for the skis, one acts on the lock 16 by means of the appropriate key, so as to extract the latch 32 from the seat 34. This allows to rotate the body 28 of the lock 16 into an open position that releases the end of the clamping element 15. It is thus possible to rotate the clamping element 15 about the pivot 26 for pivoting to the supporting element 14, so as to allow access to said seats 23 to load or unload the skis.

The above described operations are obviously facilitated by the fact that during this step the supporting element 14 is arranged in a lowered position on one side of the vehicle, is appropriately tilted, and can be easily accessed even by short people.

The operations for opening and closing the clamping element 15 are furthermore very simple and rapid.

The rotation and locking of the assembly constituted by the supporting element 14 and by the clamping element 15 in the transport position on top of the motor vehicle is of course performed in reverse.

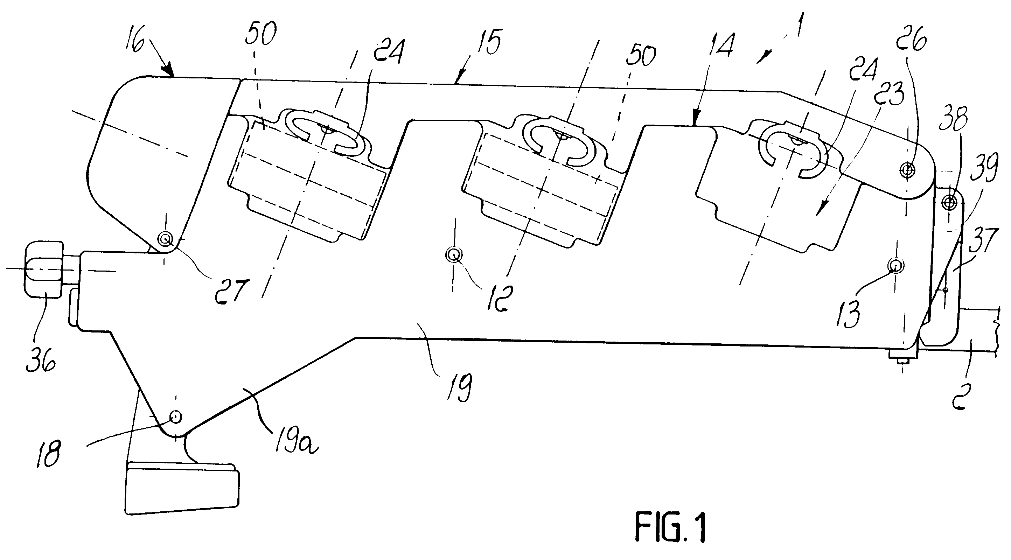

It should be noted that in the transport position the skis accommodated transversely in the seats 23, shown in dashed lines 50 in the drawing, are locked elastically by the trimmings 24 which are mounted on the clamping element 15. Said elastic trimmings 24 are shaped so that they are deformable and thus retain skis having different thicknesses, as shown schematically in figures 1 and 2.

To conclude, the described ski rack allows to load and unload the skis easily and quickly. The fact should be stressed that said ski rack can be applied to conventional racks and therefore can be used universally. Two devices of the described type, mounted at an appropriate mutual distance on corresponding cross-members of the rack, are of course to be used on the motor vehicle.

In the practical embodiment of the invention, the materials employed, as well as the shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Ski rack for motor vehicles, characterized in that it comprises: a supporting element (14) that forms seats (23) for receiving respective pairs of skis and is articulated to lever means (10,11) which are suitable to produce the angular rotation of said supporting element (14) between a transport position, located above means (3) for coupling to the motor vehicle, and a lateral downward-tilted position (100) for loading and unloading said skis; a clamping element (15), which is pivoted to said supporting element (14) and is adapted to be locked by a lock element (28) in a position for closing said seats (23) in which the skis are accommodated; and an engagement element (37), which is adapted to rigidly couple said supporting element (14) to said coupling means (3) in said transport position.

2. Device according to claim 1, characterized in that said lever means adapted to produce the angular rotation of said supporting element (14) have a first pair of levers (10) and a second pair of levers (11) which are respectively articulated to said coupling means (3) at one end and to said supporting element (14) at the opposite end, and are oscillatable on vertical planes which lie longitudinally to said coupling means (3), so as to form a sort of articulated quadrilateral.

3. Device according to claim 1, characterized in that it has spring means (17) which are rigidly coupled to said coupling means (3) at one end and, at the opposite end, to a pivot (12) for the articulation of said lever means (10,11) to said supporting element (14), so as to contrast said angular rotation of said supporting element (14).

4. Device according to claim 1, characterized in that said engagement element (37) is actuated into the release position by spring means (40) and is rigidly coupled to the end of a tie rod (35) which runs longitudinally with respect to said coupling means (3) and can be actuated, at its opposite end, by means of a screw element (36) which is suitable to cause said tie rod (35) to move into a position for engaging said coupling means (3), in contrast with said spring means (40).

5. Device according to claim 1, characterized in that said coupling means include a profiled element (3) which is adapted to be associated longitudinally with a transverse bar (2) of a conventional rack and is laterally provided with pivots (10,11) for the articulation of said lever means.

6. Device according to claim 1, characterized in that said lock element (16) is pivoted to said supporting element (14) so that it can oscillate between an open position and a closed position in which it is adapted to engage said clamping element (15) at the end that lies opposite to the one where it is articulated to said supporting element (14).

7. Device according to claim 1, characterized in that said clamping element (15) is provided, at said ski seats (23), with respective deformable elastic trimmings (24) adapted to act on said skis.

8. Ski rack for motor vehicles according to what can be deduced from the description and from the drawings.
